# EUROPEAN PATENT APPLICATION

(11) **EP 3 153 985 A1**
(43) Date of publication of application: **12.04.2017**
(21) Application number: 15306588.3
(22) Date of filing: 08.10.2015
(51) Int. Cl.: G06F 21/31, H04L 29/06, H04L 9/00

(54) **DEVICE AND METHOD FOR PASSWORD GENERATION IN A USER DEVICE**

(71) Applicant: Thomson Licensing, 92130 Issy-les-Moulineaux (FR)
(72) Inventor: NEUMANN, Christoph, 35576 Cesson Sévigné (FR); HEEN, Olivier, 35576 Cesson Sévigné (FR); GELLOZ, Raphael, 35576 Cesson Sévigné (FR)
(74) Representative: Browaeys, Jean-Philippe

(57) **Abstract**

A device (100) and a method for password generation. When password generation is triggered (S20), a processor (110) of the device (100) applies (S21) a function to constant and non-constant parameters in or around the device (100) to obtain a value from which the password is generated (S22). A password authentication value is generated (S23) from the password and stored, and the password is encrypted using a public key (S24) and stored. The password is displayed (S25) on a persistent electronic display (150) on which information rests even without power supply. The processor (110) finally deletes (S26) the generated password so that it is only displayed on the display (150).

## Description

### TECHNICAL FIELD

The present disclosure relates generally to password generation, and particularly to automatic password generation in user devices.

### BACKGROUND

Many user devices are protected by passwords for security reasons. Such devices comprise (Digital Subscriber Line, DSL) gateways, cable modems and set-top boxes. In the following, a gateway will be used as a non-limitative example.

A gateway typically has at least two passwords: a network password - such as a WiFi password (a WPA (WiFi Protected Access) PSK (Pre-Shared Key) passphrase) used to connect to the network managed by the gateway - and an administrator password used to manage the gateway itself.

Typically, each gateway is shipped with factory passwords set during manufacture. These passwords are calculated by the gateway itself by applying a function based on obfuscation or cryptography (or a combination thereof) on information available within and specific to the gateway, for example the MAC (Media Access Control) address, serial number and cryptographic keys. Since the functions are deterministic and the information does not change, the passwords are always the same for a given device, even after a factory reset.

Constant passwords are an advantage from a usability point of view. Since the passwords do not change, they can be printed on a sticker on the gateway and users may still factory reset the gateway as this does not change the password. The user can then easily read the network password to connect a device to the gateway's WiFi network and the administrator password to manage the gateway.

However, the use of constant passwords results in drawbacks when it comes to security.

For one thing, the entropy of the passwords tends to be low, since they tend to be based on fixed internal values that carry semantic information.

For another, all the information used for the generation of the password is stored on the gateway. This means that an attacker with access to the gateway can access this information, unless the gateway is properly protected, typically by a Trusted Platform Module (TPM) or other costly hardware protection. Access to all the information makes it easier to find the function that is used to calculate the password. Once the attacker has found the generation function, it can be used to attack every other gateway that uses the same function. In the past, several types of gateways have been attacked this way, revealing the passwords for millions of individual gateways.

It is therefore desirable to develop a solution for password generation that addresses at least some of the problems of the conventional solutions. The present disclosure provides such a solution.

### SUMMARY OF DISCLOSURE

In a first aspect, the present principles are directed to a device for password generation. The device comprises a hardware processor configured to generate a password from at least one non-static parameter, process the password to obtain a password verification value, store the password verification value in a memory, transfer the password through a one-way connection to a storage unit, and delete the password from at least one of the hardware processor and the memory. The device further comprises the memory configured to store the password verification value.

Various embodiments of the first aspect include:
- That the hardware processor is further configured to encrypt the password using a public key of an operator or a trusted third party and to store the password thus encrypted in the memory.
- That the storage unit is a persistent display. The persistent display can be implemented using electronic ink or electronic paper technology.
- That the processor is configured to generate the password also from at least one static parameter.
- That the at least one non-static parameter comprises at least one of WiFi noise, ambient temperature, processor load, and a parameter related to user input.
- That the processor is configured to generate the password by obtaining a first value from the at least one non-static parameter and by processing the first value to obtain a human-readable text string.
- That the password is a network password for connecting to the device. The network password can be a WiFi Protected Access Pre-Shared Key (WPA PSK) and the password verification value a WiFi Protected Access Pairwise Master Key (WPA PMK).
- That the password is an administrator password.

In a second aspect, the present principles are directed to a method for generating a password. A hardware processor generates a password from at least one non-static parameter, processes the password to obtain a password verification value, stores the password verification value in a memory, transfers the password through a one-way connection to a storage unit, and deletes the password so that the password is only stored by the storage unit.

Various embodiments of the second aspect include:
- That the hardware processor further encrypts the password using a public key of an operator or a trusted third party and stores the password thus encrypted in the memory.
- That the storage unit is a persistent display.

In a third aspect, the present principles are directed to a computer program comprising program code instructions executable by a processor for implementing the steps of a method according to the second aspect.

In a fourth aspect, the present principles are directed to a computer program product which is stored on a non-transitory computer readable medium and comprises program code instructions executable by a processor for implementing the steps of a method according to the second aspect.

### BRIEF DESCRIPTION OF DRAWINGS

Preferred features of the present principles will now be described, by way of non-limiting example, with reference to the accompanying drawings, in which
Figure 1 illustrates a device implementing the present principles; and
Figure 2 illustrates a method for password generation according to a preferred embodiment of the present principles.

### DESCRIPTION OF EMBODIMENTS

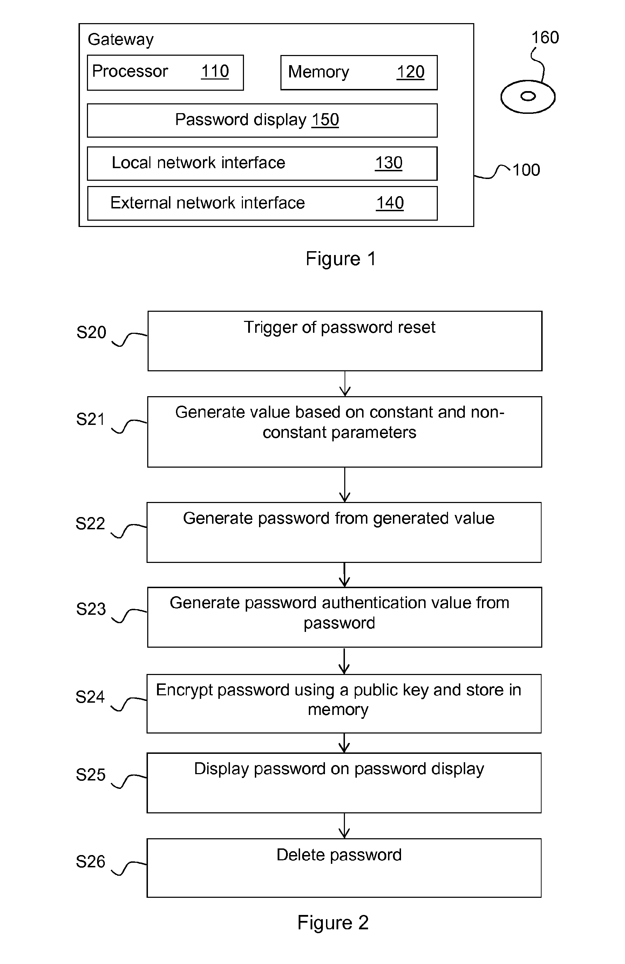

Figure 1 illustrates a gateway (still used as a non-limitative example) 100 implementing the present principles. The gateway 100 comprises at least one hardware processing unit ("processor") 110, external or internal (or a combination of the two) memory 120, a first (local) network interface 130 configured to communicate with other devices using, for example, WiFi technology, and a second (external network interface 140 for communication with for example a head-end, such as an Internet server. The gateway further comprises a password display 150. The password display is a persistent display preferably implemented using technology such as electronic ink, electronic paper or other passive display that only draws power when the display is updated. The skilled person will appreciate that the illustrated device is very simplified for reasons of clarity, thus not showing features such as internal connections and power supplies. A non-transitory storage medium 160 stores at least one computer program with instructions that, when executed by a processor, perform the method for password generation illustrated in Figure 2.

As already mentioned, a gateway uses at least two passwords: a network password and an administrator password. Unless explicitly stated, the solution applies to both.

Figure 2 illustrates a method for password generation according to a preferred embodiment of the present principles.

In step S20, generation of a new password is triggered. This is preferably done by the user pressing the factory reset button or another button on the gateway.

In step S21, the processor 110 generates a value using a cryptographic pseudo-random number generator preferably seeded with several sources of entropy such as:
- static parameters internal to and often specific to the gateway such as its MAC address, its serial number and cryptographic keys, and
- non-static parameters such as WiFi noise, ambient temperature, processor load, and parameters related to user input (for example the time at which a button was pressed).

The generated value is temporarily stored in the memory 120.

In step S22, the value is preferably further processed to obtain a password. This processing can be formatting in order to present the password as a string that can be printed on the display. For example, any binary sequence can be formatted into a hexadecimal string, which much easier to read by a user. For WiFi, the password is the WPA-PSK; for an administrator password, this is preferably a clear-text password.

Once the password has been obtained, in step S23, a password verification value is generated from the password and stored in the memory 120.

For a network password, the password verification value is derived from the password using a one-way function and stored persistently in the memory 120 to enable authentication of devices that connect to the network. In the WiFi case, the password verification value is the so-called WPA PMK (Pairwise Master Key), calculated from the WPA PSK and the SSID. WPA PMK = some_hash_function(WPA PSK, SSID). More precisely: WPA PMK = PBKDF2 (passphrase, SSID, 4096, 256), where PBKDF2 is a standardized method to derive a key from a passphrase as specified in RFC2898.

For an administrator password, the password is preferably salted and hashed and the resulting password verification value is stored persistently in the memory 120 to enable authentication of a user that tries to manage the gateway.

It is noted that how the password is processed depends on the authentication protocol. The password may simply be hashed without any salt if HTTP digest authentication is used. On the other hand, for the Secure Remote Password protocol (SRP), then a salted hash is stored.

In step S24, the generated password is encrypted using a public key of the operator, usually the operator that provides Internet access for the gateway. Another possibility is to use the public key of a trusted third party. The encrypted password is then stored persistently in the memory 120.

The operator can then, if needed, use for example so-called TR-069 to retrieve the encrypted password and use its corresponding private key to decrypt the encrypted password and thus obtain the password in the clear.

In step S25, the password display 150 is updated with the generated password.

In step S26, the password is deleted from the memory 120.

It is noted that the gateway then neither has knowledge of the administrator password nor can obtain this, while the gateway is able to verify an input password and the operator can retrieve a clear text version of the password. For the network password, the gateway does not store and cannot obtain the password, WPA PSK, but it does know the password verification value, WPA PMK, which enables verification that an input password is correct.

In a variant, a specially arranged memory takes the place of the password display. The memory is connected to the gateway via a one-way connection, so that the gateway can write the password in the memory (possibly as a text file), but not read the memory from it. This are several ways of achieving this. For example, the memory may have two interfaces, a first interface arranged only to receive data (i.e., the password) from the gateway and a second interface arranged to output the data to another device, such as a computer. A further possibility is a USB memory stick to which the password is written after which the interface is disabled until a further password generation.

In another variant, the processor encrypts the password using a public key of the user's smartphone or tablet (that stores the corresponding private key). The thus encrypted password can then be transferred via a wireless interface to the smartphone or tablet for storage on it or for further transfer on the cloud for storage there. This encrypted password can then be retrieved by the smartphone or tablet and decrypted using the private key, so that the user can use the password.

It will be appreciated that the present principles can provide a solution that provides a secure password reset mechanism in user devices.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

**1.** A device (100) for password generation, the device (100) comprising:
a hardware processor (110) configured to:
generate a password from at least one non-static parameter;
process the password to obtain a password verification value;
store the password verification value in a memory (120);
transfer the password through a one-way connection to a storage unit (150); and
delete the password from at least one of the hardware processor and the memory;
memory (120) configured to store the password verification value.

**2.** The device of claim 1, wherein the hardware processor (110) is further configured to encrypt the password using a public key of an operator or a trusted third party and to store the password thus encrypted in the memory (120).

**3.** The device of claim 1, wherein the storage unit (150) is a persistent display.

**4.** The device of claim 3, wherein the persistent display is implemented using electronic ink or electronic paper technology.

**5.** The device of claim 1, wherein the processor is configured to generate the password also from at least one static parameter.

**6.** The device of claim 1, wherein the at least one non-static parameter comprises at least one of WiFi noise, ambient temperature, processor load, and a parameter related to user input.

**7.** The device of claim 1, wherein the processor is configured to generate the password by obtaining a first value from the at least one non-static parameter and by processing the first value to obtain a human-readable text string.

**8.** The device of claim 1, wherein the password is a network password for connecting to the device (100).

**9.** The device of claim 8, wherein the network password is a WiFi Protected Access Pre-Shared Key (WPA PSK) and the password verification value is a WiFi Protected Access Pairwise Master Key (WPA PMK).

**9.** The device of claim 1, wherein the password is an administrator password.

**10.** A method for generating a password, the method comprising:
generating (S22), by a hardware processor, a password from at least one non-static parameter;
processing (S23), by the hardware processor, the password to obtain a password verification value;
storing (S23), by the hardware processor, the password verification value in a memory (120);
transferring (S25), by the hardware processor, the password through a one-way connection to a storage unit (150); and
deleting (S26), by the hardware processor, the password so that the password is only stored by the storage unit.

**11.** The method of claim 10, further comprising encrypting (S24), by the hardware processor, the password using a public key of an operator or a trusted third party and storing the password thus encrypted in the memory (120).

**12.** The method of claim 10, wherein the storage unit (150) is a persistent display.

**13.** Computer program comprising program code instructions executable by a processor for implementing the steps of a method according to at least one of claims 10 to 12.

**14.** Computer program product (160) which is stored on a non-transitory computer readable medium and comprises program code instructions executable by a processor for implementing the steps of a method according to at least one of claims 10 to 12.
